# EUROPEAN PATENT SPECIFICATION

(11) **EP 3 034 647 B1**
(45) Date of publication and mention of the grant of the patent: **18.09.2019**
(21) Application number: 14836187.6
(22) Date of filing: 07.07.2014
(51) Int. Cl.: C23C 2/12, C22C 21/02, C23C 2/28, C23C 2/40, B32B 15/01, C22C 38/14, C22C 38/06, C22C 38/04, C22C 38/02, C22C 38/00, C21D 9/46, C21D 1/26, C22C 21/00

(54) **AL-COATED STEEL SHEET HAVING EXCELLENT TOTAL REFLECTION PROPERTIES AND CORROSION RESISTANCE, AND METHOD FOR MANUFACTURING SAME**
AL-BESCHICHTETES STAHLBLECH MIT HERVORRAGENDEN TOTALREFLEXIONSEIGENSCHAFTEN UND KORROSIONSBESTÄNDIGKEIT SOWIE VERFAHREN ZUR HERSTELLUNG DAVON
PLAQUE D'ACIER ALUMINIÉE EXCELLENTE EN TERMES DE CARACTÉRISTIQUES DE RÉFLEXION TOTALE ET DE RÉSISTANCE À LA CORROSION, ET PROCÉDÉ DE FABRICATION DE CELLE-CI

(30) Priority: 14.08.2013 JP 2013168478
(43) Date of publication of application: 22.06.2016
(73) Proprietor: NIPPON STEEL NISSHIN CO., LTD., Chiyoda-ku Tokyo 100-8366 (JP)
(72) Inventor: FURUKAWA Shinya, Sakai-shi Osaka 592-8332 (JP); HATTORI Yasunori, Sakai-shi Osaka 592-8332 (JP)
(74) Representative: Emde, Eric
(86) International application number: PCT/JP2014/068035
(87) International publication number: WO 2015/022821

(56) References cited:
- EP-A1- 0 081 847
- EP-A1- 1 669 153
- JP-A- H06 128 713
- JP-A- H06 128 713
- JP-A- H06 316 753
- JP-A- H06 330 274
- JP-A- 2000 256 816
- JP-A- 2000 256 816
- JP-A- 2000 290 764
- JP-A- 2005 319 481

## Description

### Technical Field

The present invention relates to an Al-coated steel sheet capable of being obtained by modifying a plated layer of a hot-dip Al based alloy plated steel sheet through a heat treatment, and particularly relates to the Al-coated steel sheet that exhibits a high total reflectivity and exhibits good corrosion resistance.

### Background Art

A hot-dip Al based alloy plated steel sheet is being widely used mainly for purposes requiring heat resistance. Many of hot-dip Al based alloy plated steel sheets having been subjected to practical use are manufactured by using an Al based alloy plating bath containing Si. The presence of Si contained may decrease the plating bath temperature, and also may decrease the thickness of the brittle alloy layer (i.e., the initial thickness of the alloy layer) formed between the base steel sheet (i.e., the base sheet for plating) and the Al based alloy plated layer in the process of hot-dip plating.

The alloy layer may grow in some cases in the use of the hot-dip Al based alloy plated steel sheet for purposes requiring heat resistance. In the case where the durability at a high temperature is to be particularly enhanced, such a measure is employed that a heat treatment is performed after the hot-dip plating (i.e., a post heat treatment), so as to form a barrier layer of AIN between the base steel sheet and the alloy layer. In this case, a base steel sheet containing N in such an amount that satisfy the formation of the AIN barrier layer is applied.

A plating bath composition containing approximately from 7 to 12% by mass of Si is effective from the standpoint of the reduction of the bath temperature of the Al based alloy plating bath, and many of the hot-dip Al based alloy plated steel sheets contains 7% by mass or more of Si in the plated layer. However, some of references cited herein below disclose examples where a post heat treatment is applied with the use of a plating bath having a relatively low Si content of 6% or less (see e.g. JP 61 124 558 A, JP 3 104 848 A, JP 6 207 262 A, JP 6 330 274 A, JP 3 383 119 B, JP 8 319 549 A, JP 3 398 810 B, JP 3 485 410 B, or JP 2000 290 764 A.

Attention is also drawn to EP 1 669 153 A1, which discloses a steel/aluminum joined structure. The structure has a hot-dip aluminized steel sheet and an aluminum or an aluminum alloy laminated thereon by spot welding, wherein a plating layer comprises from 3 to 12 mass % of Si and from 0.5 to 5 mass % of Fe, the area percentage of an Al-Fe binary alloy layer in joining interface between the aluminized steel sheet and the aluminum or the aluminum alloy is suppressed to 90 % or less, and a region having no alloy layer appears between an Al-Fe-Si ternary alloy layer being present in a base steel /plating layer interface and the Al-Fe binary alloy layer. The base steel of the aluminized steel sheet comprises preferably 0.002 to 0.020 mass % of N and has an N-rich layer containing 3.0 atomic % or more of N formed on its surface contacting with the aluminized layer. JP 2000 256 816 A discloses a production process of a hot-dip aluminized steel sheet excellent in workability and corrosion resistance. In the process, a steel sheet held at ≥630°C is introduced into a plating bath held at ≥640°C, cooled to 400°C at ≥10°/sec average cooling rate after plating, and heated at 250-500°C for 5-50 hr. An obtained hot-dip aluminized layer has 5-12 wt.% Si content and a coating weight of 100-350 g/m² per both surfaces. Furthermore, JP H06 128 713 A discloses a production process of a hot-dip aluminized steel sheet excellent in corrosion resistance and workability. In the process, a hot-dip aluminum coating layer having a composition consisting of 3-10% Si and the balance Al with inevitable impurities and having coating weight of 100 to 400 g/m² per both side is subjected to a heat treatment at 250-450°C for 10-1200min.

### Summary of Invention

### Technical Problem

A hot-dip Al based alloy plated steel sheet is demanded to have good heat reflection characteristics due to the aforementioned purposes requiring heat resistance. In the application thereof to a building material of a tunnel wall or the like, a reflective plate of a lighting equipment, and the like, it is demanded to have good reflection characteristics with small light absorption. The reflection capabilities of heat and light roughly depend on the total reflectivity. Accordingly, in consideration of the application thereof to purposes requiring heat resistance and purposes utilizing light reflection capability, it is advantageous to have high total reflection characteristics. In the description herein, the fact that an article has high total reflection characteristics is expressed that the article is "having excellent total reflection characteristics".

Good corrosion resistance is demanded in purposes of a building material and the like. However, a hot-dip Al based alloy plated steel sheet that is manufactured with a plating bath containing Si has a tendency of decreasing the corrosion resistance, as compared to one manufactured with a pure Al based alloy plating bath. Furthermore, it may be assumed that an Al based alloy plated steel sheet is used after subjecting to an anodizing treatment, as similar to an Al alloy material. However, an ordinary Al based alloy plated sheet has a defect that the appearance thereof becomes blackish after an anodizing treatment, and an anodized surface having good design quality is difficult to achieve.

The invention is to provide an Al-coated steel sheet that is excellent in total reflection characteristics, corrosion resistance, and appearance after subjecting to an anodizing treatment, as compared to an ordinary hot-dip Al based alloy plated steel sheet.

### Solution to Problem

The object may be achieved by an Al-coated steel sheet having excellent total reflection characteristics and corrosion resistance as set forth in claim 1 and a method for manufacturing the same as set forth in claim 2. The steel sheet contains a base steel sheet having on a surface thereof an Al-coated layer having an average thickness of 7 µm or more with an Al-Fe-Si based alloy layer intervening therebetween, a surface layer portion of the Al-coated layer extending from the surface thereof to a depth of 3 µm having an average Si concentration of 1.07% by mass or less, and an area ratio of an Al-Fe based intermetallic compound phase occupying the surface of the Al-coated layer being 10% or less. The Al-coated layer is obtained by modifying a hot-dip Al based alloy plated layer containing Si through a heat treatment. At this time, the Si content of the hot-dip plating bath is controlled to be at a range of 1.5% by mass or more and less than 3.0% by mass.

The Al-coated layer herein is a layer that has an Al phase as a matrix. The Al-coated layer may contain an Al-Fe based intermetallic compound phase and a Si phase.

The average Si concentration of the surface layer portion of the Al-coated layer extending from the surface thereof to a depth of 3 µm may be obtained by performing EDX analysis (energy dispersive X-ray spectrometry analysis) for the cross sectional surface in parallel to the thickness direction of the Al-coated layer. Specifically, in an SEM observation field of the cross sectional surface with a magnification of 5,000, a rectangular area having a dimension of 3 µm × 20 µm with the edge having a length of 3 µm in the thickness direction of the Al-coated layer (i.e., the thickness direction of the steel sheet) is assumed. The rectangular area that entirely overlaps the Al-coated layer (i.e., the rectangular area does not deviate from the Al-coated layer) and has the edge having a length of 20 µm being in contact with at least a part of the outermost surface of the Al-coated layer is set as a measurement area. The measurement area is measured for the average Si concentration (conversion value in terms of percentage by mass) by EDX analysis. The measurement operation above is performed for five or more fields having been randomly selected, and the average value of the average Si concentration values of the measurement areas may be designated as the "average Si concentration of the surface layer portion of the Al-coated layer extending from the surface thereof to a depth of 3 µm".

The area ratio of an Al-Fe based intermetallic compound phase occupying the surface of the Al-coated layer means the ratio of the area of the portion having the Al-Fe based intermetallic compound phase present therein with respect to the projected area of the observed area obtained by viewing the surface of the Al-coated layer in the thickness direction. The Al-Fe based intermetallic compound phase that is exposed to the surface of the Al-coated layer may be identified as a phase having an Fe content in terms of percentage by mass that is the second highest next to Al.

### Advantageous Effects of Invention

According to the invention, an Al-coated steel sheet may be provided that has a high total reflectivity, good corrosion resistance, and an excellent appearance after subjecting to an anodizing treatment, as compared to an ordinary hot-dip Al based alloy plated steel sheet. The Al-coated steel sheet is particularly excellent in heat reflection characteristics and light reflection characteristics due to the high total reflectivity thereof, and thus is considerably useful for purposes requiring heat resistance and purposes utilizing light reflection capability. The Al-coated steel sheet may be obtained by subjecting a hot-dip Al based alloy plated steel sheet capable of being manufactured with an ordinary hot-dip plating line, as a base material, to a post heat treatment. Accordingly, the invention contributes to the enhancement of the purposes of a hot-dip Al based alloy plated steel sheet.

### Brief Description of Drawings

Fig. 1 is an illustration schematically showing the cross sectional structure of the ordinary hot-dip Al based alloy plated steel sheet manufactured by using an Al based alloy plating bath having a high Si content, intact after plating.
Fig. 2 is an illustration schematically showing the cross sectional structure of the plated steel sheet of Fig. 1, after subjecting to a post heat treatment.
Fig. 3 is an illustration schematically showing the cross sectional structure of the hot-dip Al based alloy plated steel sheet manufactured by using an Al based alloy plating bath having a low Si content, intact after plating.
Fig. 4 is an illustration schematically showing the cross sectional structure according to the invention of the plated steel sheet of Fig. 3, after subjecting to a post heat treatment.
Fig. 5 is an illustration schematically showing the cross sectional structure of the hot-dip Al based alloy plated steel sheet manufactured by using a pure Al plating bath.
Fig. 6 is a graph exemplifying the relationship between the heating temperature and the heating time required for making an average Si concentration of 2.0% by mass or less for the surface layer portion of the Al-coated layer extending from the surface thereof to a depth of 3 µm.
Fig. 7 is a micrograph showing the cross sectional structure of the hot-dip Al based alloy plated steel sheet manufactured by using a hot-dip Al based alloy plating bath having a Si content of 9% by mass, intact after plating.
Fig. 8 is a micrograph showing the cross sectional structure of the Al-coated steel sheet obtained by subjecting the hot-dip Al based alloy plated steel sheet manufactured by using a hot-dip Al based alloy plating bath having a Si content of 9% by mass to a post heat treatment in the air at 450°C for 24 hours.
Fig. 9 is a micrograph showing the cross sectional structure of the hot-dip Al based alloy plated steel sheet manufactured by using a hot-dip Al based alloy plating bath having a Si content of 2.5% by mass, intact after plating.
Fig. 10 is a micrograph showing the cross sectional structure of the Al-coated steel sheet obtained by subjecting the hot-dip Al based alloy plated steel sheet manufactured by using a hot-dip Al based alloy plating bath having a Si content of 2.5% by mass to a post heat treatment in the air at 450°C for 24 hours.
Fig. 11 is an SEM micrograph of the alloy layer portion on the cross section of the hot-dip Al based alloy plated steel sheet manufactured by using a hot-dip Al based alloy plating bath having a Si content of 2.5% by mass, intact after plating.
Fig. 12 is an SEM micrograph of the alloy layer portion on the cross section of the Al-coated steel sheet obtained by subjecting the hot-dip Al based alloy plated steel sheet manufactured by using a hot-dip Al based alloy plating bath having a Si content of 2.5% by mass to a post heat treatment in the air at 450°C for 24 hours.

### Description of Embodiments

The Al-coated steel sheet of the invention can be achieved by modifying a plated layer of a hot-dip Al based alloy plated steel sheet manufactured by using an Al based alloy plating bath containing Si, through a post heat treatment. It is important herein that the post heat treatment largely enhances the diffusion of Si in the plated layer, as compared to a post heat treatment having been ordinarily performed, and thereby the Si concentration of the surface layer portion of the plated layer is reduced. Furthermore, for reducing the Si concentration of the surface layer portion of the plated layer, it is considerably effective to use a hot-dip Al based alloy plating bath having a relatively low Si content.

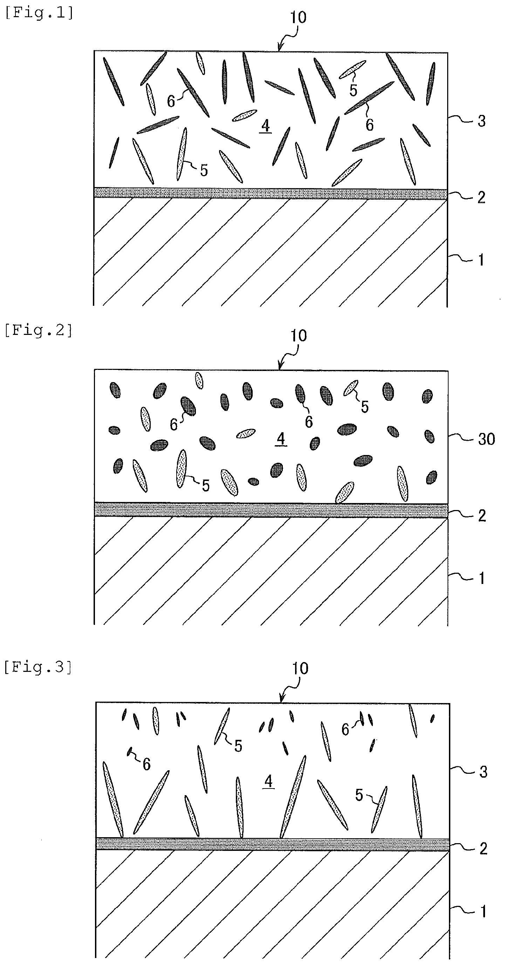

Fig. 1 schematically shows a cross sectional structure of an ordinary hot-dip Al based alloy plated steel sheet manufactured by using an Al based alloy plating bath containing Si in an amount of approximately from 7 to 10% by mass, intact after plating. The Al based alloy plated layer 3 is formed on the surface of the base steel sheet 1 as a base sheet for plating with the alloy layer 2 intervening therebetween. The alloy layer 2 is an "Al-Fe-Si based alloy layer" containing mainly an intermetallic compound containing Al, Fe and Si as components. The Al based alloy plated layer 3 contains an Al-Fe based intermetallic compound phase 5 and a Si phase 6 present in an Al phase 4 as a matrix. The Al-Fe based intermetallic compound phase 5 is present in a relatively large amount on the side close to the alloy layer 2, and the Si phase 6 is present in a relatively large amount on the side close to the surface 10.

Fig. 2 schematically shows the cross sectional structure of the plated steel sheet of Fig. 1, after subjecting to a post heat treatment at a temperature of approximately 450°C. The alloy layer 2 is slightly increased in thickness. The Si phase 6 present in the plated layer 3 in Fig. 1 is formed into a spherical shape and is present in a large amount in the Al phase 4. The Al-Fe based intermetallic compound phase 5 also tends to be a spherical shape slightly. The Al-coated layer thus derived from the plated layer after subjecting to the post heat treatment is shown by a numeral 30 in the figure.

Even in the case where a hot-dip Al based alloy plated steel sheet manufactured by using an ordinary hot-dip Al based alloy plating bath containing Si in an amount, for example, of 7% by mass or more is subjected to a post heat treatment for a certainly long period of time, the Si phase 6 remains in a large amount in the Al-coated layer 30, as shown in Fig. 2. It has been confirmed that the Al-coated steel sheet having this structure state is substantially not improved in total reflection characteristics, corrosion resistance, and appearance after subjecting to an anodizing treatment. That is, an ordinary hot-dip Al based alloy plated steel sheet is substantially incapable of providing the improvement effect for the aforementioned characteristics through a post heat treatment.

Fig. 3 schematically shows a cross sectional structure of a hot-dip Al based alloy plated steel sheet manufactured by using an Al based alloy plating bath having a low Si content of approximately from 1. 5 to 6.0% by mass, intact after plating. The alloy layer 2 present on the surface of the base steel sheet 1 tends to be slightly thicker than the ordinary hot-dip Al based alloy plated steel sheet manufactured by using a hot-dip Al based alloy plating bath having a high Si content (Fig. 1), but the deterioration of the characteristics, such as the workability, caused thereby does not make a problem in normal use. The alloy layer 2 contains mainly an Al-Fe based intermetallic compound and an Al-Fe-Si based intermetallic compound as described later. In the plated layer 3, an Al-Fe based intermetallic compound phase 5 and a small amount of a Si phase 6 are observed in an Al phase 4. The amount of the Si phase 6 present varies depending on the Si content in the plating bath. The Al-Fe based intermetallic compound phase 5 is present in a large amount on the side close to the alloy layer 2 and in a small amount on the side close to the surface 10. The Si phase 6 is present mainly on the side close to the surface 10.

The hot-dip Al based alloy plated steel sheet obtained by using a hot-dip Al based alloy plating bath having a relatively small Si content is different in structure state of the plated layer 3 from the ordinary hot-dip Al based alloy plated steel sheet (Fig. 1) in such a point that the amount of the Si phase 6 present is small. According to the investigation by the present inventors, however, only the use of this structure state cannot provide a sufficient improvement effect for total reflection characteristics, corrosion resistance, and appearance after subjecting to an anodizing treatment.

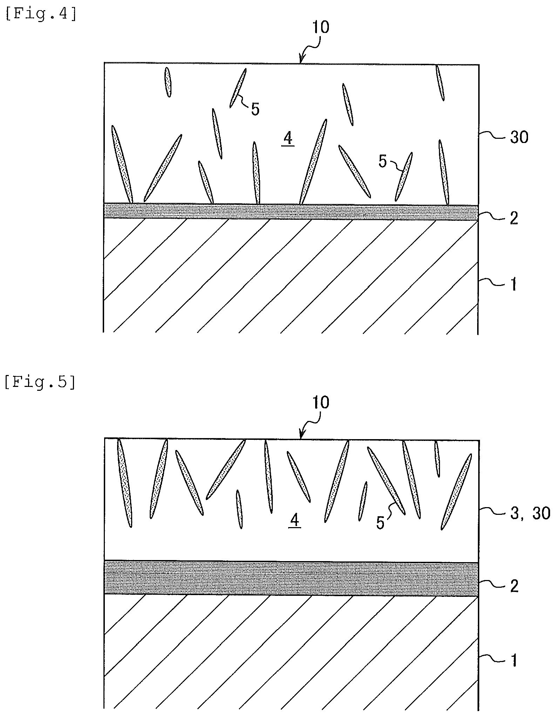

Fig. 4 schematically shows the cross sectional structure that is obtained by subjecting the plated steel sheet shown in Fig. 3 to a post heat treatment at a temperature of approximately 450°C for a relatively long period of time of approximately 24 hours. There is no conspicuous growth of the alloy layer 2. There is substantially no presence of a Si phase observed in the Al-coated layer 30 derived from the plated layer 3 in Fig. 3. On the other hand, the Al-Fe based intermetallic compound phase 5 is not largely changed in shape. The average thickness of the Al-coated layer 30 per one surface of the steel sheet is necessarily 7 µm or more in order that the heat resistance and corrosion resistance inherent to the Al based alloy plated layer are sufficiently exhibited, and is more preferably 20 µm or more. The upper limit of the average thickness is not particularly determined, and the average thickness may be generally in a range of 50 µm or less, and may be controlled to 40 µm or less.

According to the detailed investigations by the inventors, it has been found that in the case where the plated steel sheet manufactured by using a hot-dip Al based alloy plating bath having a small Si content as in Fig. 3 is subjected to a post heat treatment, Si in the plated layer 3 is diffused to the region having a relatively low Si concentration close to the alloy layer 2 and is incorporated in the alloy layer 2, and in other words, Si present in the plated layer 3 is used for the reaction that changes the alloy layer 2 to an Al-Fe-Si based alloy layer containing mainly an intermetallic compound having a higher Si content. The Si concentration of the surface layer portion of the Al-coated layer 30 close to the surface 10 thereof can be reduced by utilizing this phenomenon. In the Al based alloy plated steel sheet shown in Fig. 1 manufactured by using a plating bath having a high Si content, the alloy layer 2 is originally an alloy layer containing mainly an intermetallic compound having a higher Si content. Therefore, the phenomenon that Si in the plated layer 3 is incorporated in the alloy layer 2 through the post heat treatment may not largely occur.

In the Al-coated layer 30 that has no Si phase observed therein or has an extremely small content of the remaining Si phase, as shown in Fig. 4, it has been found that the total reflectivity and the corrosion resistance due to the Al-coated layer may be enhanced particularly in the case where the Si concentration of the surface layer portion thereof close to the surface 10 is sufficiently reduced. The reduction of the Si concentration of the surface layer portion is also important for improving the appearance after an anodizing treatment. Specifically, the total reflection characteristics and the corrosion resistance may be considerably improved in the case where the average Si concentration of the surface layer portion extending from the surface thereof to a depth of 3 µm is 2.0% by mass or less. In the present invention the total reflection characteristics and the corrosion resistance are further considerably improved stably in the case where the average Si concentration of the surface layer portion is 1.3% by mass or less. The lower limit of the average Si concentration of the surface layer portion of the Al-coated layer extending from the surface thereof to a depth of 3 µm is not necessarily determined and may be reduced to 0% by mass, but in consideration of the load in the post heat treatment process, the lower limit thereof may be in a range of 0.5% by mass or more.

It is considered that the total reflection characteristics are improved by reducing the Si concentration of the surface layer portion since the Al purity of the surface layer portion of the plated layer is increased, and the reflection characteristics that are closer to pure Al may be imparted thereto.

On the surface 10 of the Al-coated layer 30, a portion where the Al-Fe based intermetallic compound phase 5 is exposed is formed. It has been found that the Al-Fe based intermetallic compound phase 5 present on the surface may deteriorate the appearance after subjecting to an anodizing treatment. The exposed Al-Fe based intermetallic compound phase 5 may also be a factor of deteriorating the total reflection characteristics and the corrosion resistance. However, in the case where a hot-dip Al based alloy plating bath containing Si in an amount of 1.5% by mass or more is used, the Al-Fe based intermetallic compound phase 5 is liable to be formed on the side close to the alloy layer 2, and the amount of the Al-Fe based intermetallic compound phase 5 formed on the side close to the surface 10 is small. As a result of various investigations, in the case where the area ratio of the Al-Fe based intermetallic compound phase occupying the surface 10 of the Al-coated layer 30 is suppressed to 10% or less, coupled with the reduction of the Si concentration in the surface layer portion described above, the appearance after subjecting to an anodizing treatment may be considerably improved. The heat reflection characteristics and the corrosion resistance may also be improved. The condition that the area ratio of the Al-Fe based intermetallic compound phase is suppressed to 10% or less may be controlled by using a hot-dip Al based alloy plating bath having a Si content of 1.5% by mass or more.

Fig. 5 schematically shows the cross sectional structure of the hot-dip Al based alloy plated steel sheet manufactured by using a pure Al plating bath. The alloy layer 2 formed between the base steel sheet 1 and the plated layer 3 is increased in thickness as compared to the hot-dip Al based alloy plated steel sheets using a Si-containing plating bath shown in Figs. 1 and 3, assuming that the base steel sheets 1 (i.e., the base sheets for plating) have the same steel composition. The Al-Fe based intermetallic compound phase 5 formed in the Al-phase 4 as a matrix of the plated layer 3 is formed in a large amount on the side close to the surface 10, which is different from the cases of Figs. 1 and 3. Even after subjecting to a post heat treatment, the cross sectional structure undergoes no large apparent change. Accordingly, a numeral 30, which corresponds to the Al-coated layer after subjecting to a post heat treatment, is also shown in Fig. 5.

In the hot-dip Al based alloy plated steel sheet having the cross sectional structure shown in Fig. 5 manufactured by using a pure Al plating bath, a large amount of the Al-Fe based intermetallic compound phase 5 is exposed to the surface of the plated layer 3. This structure state is similarly maintained even after subjecting to a post heat treatment. The Al-Fe based intermetallic compound phase 5 that is present on the surface may be a factor of deteriorating the appearance after subjecting to an anodizing treatment and the corrosion resistance, as described above. For improving the appearance after subjecting to an anodizing treatment and the corrosion resistance, it is considerably effective to use a hot-dip Al based alloy plating bath having a Si content of 1.5% by mass or more.

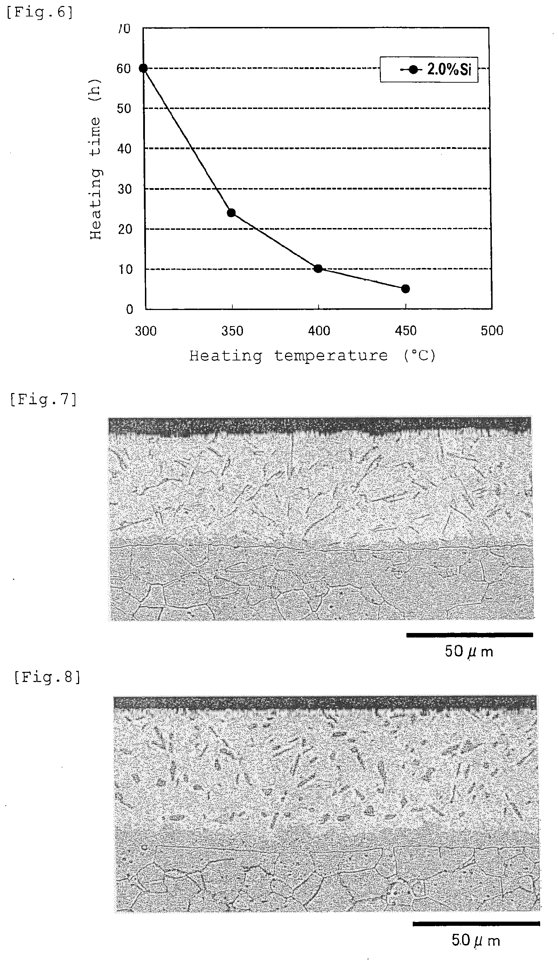

Fig. 6 exemplifies the relationship between the heating temperature and the heating time required for making an average Si concentration of 2.0% by mass or less for the surface layer portion of the Al-coated layer extending from the surface thereof to a depth of 3 µm in the case where a hot-dip Al based alloy plated steel sheet manufactured by using a hot-dip Al based alloy plating bath having a Si content of 2.5% by mass is subjected to a post heat treatment. A post heat treatment of a hot-dip Al based alloy plated steel sheet has been ordinarily known, as described above. However, the ordinary post heat treatment is difficult to reduce sufficiently the Si concentration of the surface layer portion of the Al-coated layer, as described above. For improving the total reflection characteristics, it is necessary to diffuse Si more thoroughly, as described, for example, in Fig. 6.

Figs. 7 to 10 exemplify micrographs of the cross sectional structures after a post heat treatment.

Fig. 7 is a micrograph showing the cross sectional structure of the hot-dip Al based alloy plated steel sheet manufactured by using a hot-dip Al based alloy plating bath having a Si content of 9% by mass, intact after plating. In the plated layer, the Al-Fe based intermetallic compound phase looking light gray and the Si phase looking blackish are dispersed in the Al phase looking white.

Fig. 8 is a micrograph showing the cross sectional structure of the Al-coated steel sheet obtained by subjecting the hot-dip Al based alloy plated steel sheet manufactured by using a hot-dip Al based alloy plating bath having a Si content of 9% by mass to a post heat treatment in the air at 450°C for 24 hours. In the Al-coated layer derived from the plated layer, the Al-Fe based intermetallic compound phase looking light gray and the Si phase looking blackish are dispersed in the Al phase looking white. The phases are formed into a spherical shape due to the application of heat.

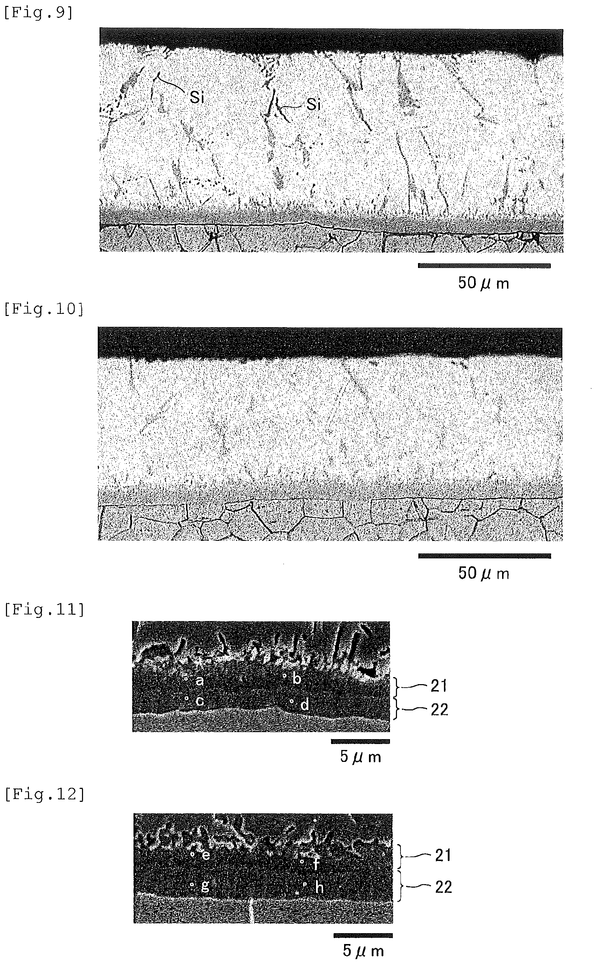

Fig. 9 is a micrograph showing the cross sectional structure of the hot-dip Al based alloy plated steel sheet manufactured by using a hot-dip Al based alloy plating bath having a Si content of 2.5% by mass, intact after plating. In the plated layer, the Al-Fe based intermetallic compound phase looking light gray is dispersed in the Al phase looking white. The Si phase looking blackish is also present. The amount of the Si phase is considerably decreased, as compared to the case shown in Fig. 7.

Fig. 10 is a micrograph showing the cross sectional structure of the Al-coated steel sheet obtained by subjecting the hot-dip Al based alloy plated steel sheet manufactured by using a hot-dip Al based alloy plating bath having a Si content of 2.5% by mass to a post heat treatment in the air at 450°C for 24 hours. In the Al-coated layer derived from the plated layer, the Al-Fe based intermetallic compound phase looking light gray is dispersed in the Al phase looking white. The presence of a Si phase cannot be confirmed from the micrograph.

Fig. 11 exemplifies an SEM micrograph of the alloy layer portion on the cross section of the hot-dip Al based alloy plated steel sheet manufactured by using a hot-dip Al based alloy plating bath having a Si content of 2.5% by mass, intact after plating. The alloy layer shows a two-layer structure constituted by an upper layer shown by a numeral 21 and a lower layer shown by a numeral 22. What is found under the lower layer is the base steel sheet. In the micrograph, four analysis positions are shown by symbols a to d. The measurement results of EDX quantitative analysis of the four positions are shown in Table 1 below.

**Table 1**

| | Analysis position | | Analysis value (% by mass) | | | Estimated major intermetallic compound phase |
|---|---|---|---|---|---|---|
| | Layer | Symbol | Al | Si | Fe | |
| Intact after hot-dip plating (see Fig. 11) | upper layer | a | 62.2 | 2.2 | 35.6 | Al₁₃Fe₄(θ) |
| | | b | 63.4 | 2.5 | 34.1 | |
| | lower layer | c | 52.4 | 2.5 | 45.1 | Al₅Fe₂(η) |
| | | d | 55.3 | 2.4 | 42.3 | |

Both the upper layer and the lower layer have a Si concentration of less than 3.0% by mass intact after plating, and the major intermetallic compound constituting the phases is estimated as an Al-Fe based intermetallic compound, as shown in Table 1.

Fig. 12 shows an SEM micrograph of the alloy layer portion on the cross section of the Al-coated steel sheet obtained by subjecting the hot-dip Al based alloy plated steel sheet manufactured by using a hot-dip Al based alloy plating bath having a Si content of 2.5% by mass to a post heat treatment in the air at 450°C for 24 hours. In the micrograph, four analysis positions are shown by symbols e to h. The measurement results of EDX quantitative analysis of the four positions are shown in Table 2 below.

**Table 2**

| | Analysis position | | Analysis value (% by mass) | | | Estimated major intermetallic compound phase |
|---|---|---|---|---|---|---|
| | Layer | Symbol | Al | Si | Fe | |
| After heating at 450°C for 24 hours (see Fig. 12) | upper layer | e | 62.1 | 8.6 | 29.3 | Al₈Fe₂Si(τ5) |
| | | f | 60.0 | 8.3 | 31.7 | |
| | lower layer | g | 61.4 | 2.0 | 36.5 | Al₁₃Fe₄(θ) |
| | | h | 60.3 | 2.3 | 37.3 | |

It is understood that the Si content of the upper layer is greatly increased through the post heat treatment. Such a phenomenon may be observed that Si present in the plated layer is incorporated in the upper layer, and the upper layer is changed to the structure containing mainly an Al-Fe-Si based intermetallic compound.

### Base Steel Sheet

The base steel sheet as the base sheet for plating applied to the invention may be various steel species that have been applied to hot-dip Al based alloy plated steel sheets. For purposes requiring heat resistance, a steel having a N content of from 0.004 to 0.015% by mass is preferably used for preventing the alloy layer from growing. Specific examples of the contents of the steel components comprise from 0.001 to 0.06% of C, 0.5% or less of Si, 1.0% or less of Mn, 0.016% or less of P, 0.007% or less of S, 0.012% or less of Al, 0.015% or less of N, and from 0 to 0.03% of Ti (all in terms percentage by mass), with the balance of Fe and unavoidable impurities. The thickness of the base sheet for plating may be in a range of from 0.1 to 3.5 mm, and may be controlled to a range of from 0.2 to 1.6 mm.

### Al Plating

The hot-dip Al based alloy plated steel sheet that is applied to the invention may be manufactured with an ordinary hot-dip plating line. The plating bath composition is an Al based alloy plating bath having a Si content of 1.5% by mass or more and 3.0% by mass or less. When the Si content of the bath is too large, it may be difficult to reduce sufficiently the Si concentration of the surface layer portion through the post heat treatment as the subsequent process step. When the Si content is too small, the structure of the plated layer becomes close to pure Al plating to enhance the tendency that the Al-Fe based intermetallic compound phase 5 is formed on the side close to the surface 10 as shown in Fig. 5, whereby it may be difficult to reduce sufficiently the area ratio of the Al-Fe based intermetallic compound phase. The Si content of the bath is therefore 1.5% by mass or more and 3.0% by mass or less. The upper limit of the Si content of the bath may be strictly controlled to less than 3.0% by mass.

Fe is generally incorporated in the bath. The Fe content is controlled 3.0% by mass or less, and preferably 2.5% by mass or less. As other elements in the bath, the bath contains at least one of 1.0% by mass or less of Ti, 1.0% by mass or less of B, 1.0% by mass or less of Zr, 1.0% by mass or less of Sr, and 5.0% by mass or less of Mg. Ti, B and Zr are effective for enhancing the surface appearance through miniaturization of the spangle size, Sr is effective for miniaturizing the Si phase, and Mg is effective for enhancing the corrosion resistance. The balance of the aforementioned elements is Al and unavoidable impurities.

The plating deposition amount is 7 µm or more, and preferably 20 µm or more, in terms of the thickness of the plated layer per one surface (exclusive of the alloy layer). The upper limit thereof is not particularly determined, and in general, the average thickness may be in a range of 50 µm or less, and may be controlled to 40 µm or less.

### Post Heat Treatment

The hot-dip Al based alloy plated steel sheet is subjected to a heat treatment for providing the Al-coated layer having a low Si concentration through modification of the Al based alloy plated layer. The heat treatment is performed after the hot-dip plating, and thus is referred to as a "post heat treatment" in the description herein. For improving the total reflection characteristics and the like, the Al based alloy plated layer is modified to the Al-coated layer having an average Si concentration of the surface layer portion extending from the surface thereof to a depth of 3 µm of 1.3% by mass or less.

As a result of various investigations, in the case where an Al-coated layer having an average Si concentration of the surface layer portion extending from the surface thereof to a depth of 3 µm of 1.3% by mass or less is to be obtained through the modification, it is effective to use a hot-dip Al based alloy plated steel sheet manufactured by using a hot-dip Al based alloy plating bath having a Si content of 1.5% by mass or more and 3.0% by mass or less. It may be controlled to use a hot-dip Al based alloy plated steel sheet manufactured by using a hot-dip Al based alloy plating bath having a Si content of 1. 5% by mass or more and less than 3.0% by mass.

The heating temperature of the post heat treatment is in a range of from 380 to 460°C. When the heating temperature is too low, the Si concentration of the surface layer portion of the plated layer may be difficult to reduce. When the heating temperature is too high, the alloy layer may excessively grow. The atmosphere of the post heat treatment may be in the air.

The Si phase formed in the plated layer tends to be distributed on the side close to the surface. In the post heat treatment, the Si phase is consumed for the reaction of increasing the Si content of the alloy layer, and thereby the Si concentration of the surface layer portion of the plated layer is reduced. It is important to determine the heating time for sufficiently progressing the diffusion of Si in the plated layer and the reaction of increasing the Si content of the alloy layer. The suitable heating time may be determined by comprehending in advance the relationship between the heating temperature and the heating time that are sufficient for reducing the Si concentration of the surface layer portion of the plated layer (see Fig. 6). Even in the case where the Si content of the plating bath is, for example, approximately 2.0% by mass, the average Si concentration of the surface layer portion of the Al-coated layer extending from the surface thereof to a depth of 3 µm intact after plating (i.e., before subjecting to the post heat treatment) is generally as large as approximately 2.5% by mass. Accordingly, it is insufficient to reduce only the Si content of the plating bath, and the target Al-coated steel sheet having a surface layer portion with a reduced Si concentration may be obtained by performing the post heat treatment thoroughly.

### Example

As a base steel sheet, a cold-rolled annealed steel sheet having the following chemical composition having a thickness of 0.8 mm was prepared.

### Chemical Composition of Base Steel Sheet

0.0033% of C, less than 0.01% of Si, 0.23% of Mn, less than 0.01% of P, 0.013% of S, 0.01% of Al, 0.0027% of O, and 0.0025% of N, with the balance of Fe and unavoidable impurities

By using the base steel sheet as a base sheet for plating, hot-dip Al based alloy plated steel sheets having an average thickness of the plated layer (exclusive of the alloy layer) in a range approximately from 30 to 50 µm were manufactured.

### Plating Condition

Si content in Al bath: shown in Tables 3 and 4
Fe content in Al bath: approximately 2% by mass
Contents of additional elements other than Si and Fe in Al bath: shown in Tables 3 and 4
Components in bath other than above: Al and unavoidable impurities
Plating bath temperature: 660°C
Plating bath dipping time: 2 seconds
Average cooling rate until complete solidification of plated layer: 13°C per second

The resulting hot-dip Al based alloy plated steel sheet was subjected to a post heat treatment at the heating temperature for the heating time shown in Tables 3 and 4 to prepare a specimen, which was then investigated as follows. The atmosphere of the post heat treatment was in the air. For comparison, a specimen that was not subjected to a post heat treatment was prepared.

### Measurement of Average Si Concentration of Surface Layer extending to Depth of 3 µm of Al-coated Layer

EDX analysis was performed for the cross sectional surface in parallel to the thickness direction of the specimen. In an SEM observation field with a magnification of 5,000, a rectangular area having a dimension of 3 µm × 20 µm with the edge having a length of 3 µm in the thickness direction of the Al-coated layer was assumed. The rectangular area that entirely overlapped the Al-coated layer and had the edge having a length of 20 µm being in contact with at least a part of the outermost surface of the Al-coated layer was set as a measurement area. The measurement area was measured for the average Si concentration (conversion value in terms of percentage by mass) by EDX analysis. The measurement operation above was performed for five fields having been randomly selected, and the average value of the average Si concentration values of the measurement areas was designated as the average Si concentration of the surface layer portion of the Al-coated layer extending from the surface thereof to a depth of 3 µm.

### Measurement of Area Ratio of Al-Fe Based Intermetallic Compound Phase occupying Surface

The surface of the Al-coated layer of the specimen was observed with SEM in the thickness direction thereof, and the area ratio of the Al-Fe based intermetallic compound phase occupying the projected area of the observed area obtained by viewing the surface of the Al-coated layer in the thickness direction was obtained. The Al-Fe based intermetallic compound phase exposed to the surface may be identified by EDX analysis. The area ratio was measured for five fields having been randomly selected, and the average value thereof was designated as the area ratio (%) of the Al-Fe based intermetallic compound phase occupying the surface.

### Measurement of Average Thickness of Alloy Layer

The average thickness of the alloy layer was measured by observing the cross section of the specimen in parallel to the thickness direction with SEM. The alloy layer exhibited a multi-phase structure including an upper layer and a lower layer, except for some instances using a plating bath having a high Si content.

### Measurement of Average Si Concentration of Upper Layer of Alloy Layer

On the cross sectional surface in parallel to the thickness direction of the specimen, ten measurement points having been randomly selected in the vicinity of the center in the thickness direction of the upper layer, as similar to the measurement points e and f shown in Fig. 12, were measured for the Si concentration by EDX analysis, and the average value thereof was designated as the average Si concentration of the upper layer of the alloy layer. For the specimen having an alloy layer having a single layer structure, the average Si concentration in the vicinity of the center in the thickness direction thereof was obtained as a reference value.

### Evaluation of Total Reflection Characteristics

The surface of the Al-coated layer of the specimen was measured for total reflectivity. The measurement was performed with MCP 3100, produced by Shimadzu Corporation, under conditions of a reflection angle of 8° and a measurement wavelength of 550 nm, and the total reflection characteristics were evaluated by the following standard. The evaluation of ○ or better was judged as passed.
⊙: total reflectivity of 75% or more
○: total reflectivity of 70% or more and less than 75%
Δ: total reflectivity of 65% or more and less than 70%
×: total reflectivity of less than 65%

### Evaluation of Corrosion Resistance

The specimen was subjected to a humidity test of retaining in an environment of a temperature of 90°C and a relative humidity of 95% for 500 hours, and the rust formation ratio was measured from the area where rust was formed on the surface, and evaluated for the corrosion resistance by the following standard. The evaluation of ○ or better was judged as passed.
⊙: rust formation ratio of less than 10%
○: rust formation ratio of 10% or more and less than 20%
Δ: rust formation ratio of 20% or more and less than 50%
×: rust formation ratio of 50% or more

### Evaluation of Appearance after subjecting to Anodizing Treatment

The specimen was subjected to an anodizing treatment, and the resulting anodized surface was measured for L value (luminosity). The anodizing treatment conditions were a treatment solution containing 150 g/L of sulfuric acid and 5 g/L of aluminum sulfate, a treatment temperature of 25°C, an electric current density of 5 A/dm², and a treating time of 10 minutes. The appearance after subjecting to the anodizing treatment was evaluated, and the evaluation of ○ or better was judged as passed.
⊙: L value of 90 or more
○: L value of 88 or more and less than 90
Δ: L value of 85 or more and less than 88
×: L value of less than 85

### Evaluation of Workability

The specimen was subjected to a cylinder drawing process, and the vertical wall portion of the processed article was evaluated for peeled off state of the Al-coated layer. The cylinder drawing conditions were a drawing ratio of 2.0, a blank diameter of 80 mm, a die diameter of 42 mm, a die corner radius of 5 mm, a punch diameter of 40 mm, and a punch corner radius of 5 mm. The workability was evaluated by the following standard, and the evaluation of ○ or better was judged as passed.
○: no peel-off of Al-coated layer found
×: peel-off of Al-coated layer found

### Evaluation of Surface Appearance

The surface of the Al-coated layer of the specimen was evaluated for refinement of the spangle in terms of the spangle density. The evaluation of ○ or better was judged as passed.
⊙: spangle density of 200 per cm² or more
○: spangle density of 50 per cm² or more and less than 200 per cm²
×: spangle density of less than 50 per cm²

The result is shown in Fig. 3 and 4.

**Table 3**

| Class | No. | Al plating bath | | Post heat treatment | | Al-coated layer | | Alloy layer | | Evaluation of characteristics | | | | |
|---|---|---|---|---|---|---|---|---|---|---|---|---|---|---|
| | | Si (% by mass) | Elements added (% by mass) | Heating temperature (°C) | Heating time (h) | Average Si concentration of surface layer to depth of 3 µm (% by mass) | Area ratio of At-Fe based intermetallic compound phase occupying surface (%) | Thickness (µm) | Average Si concentration of upper layer (% by mass) | Total reflection characteristics | Corrosion resistance | Appearance after subjecting to anodizing treatment | Workability | Surface appearance |
| | 1 | 1.5 | - | 450 | 24 | 1.02 | 9.4 | 8 | 8.0 | ⊙ | ⊙ | ⊙ | ○ | ○ |
| | 2* | 6.0 | - | 450 | 24 | 1.90 | 5.0 | 5 | 9.5 | ○ | ⊙ | ○ | ○ | ○ |
| | 3* | 2.5 | - | 300 | 100 | 1.51 | 6.2 | 5 | 8.1 | ○ | ○ | ○ | ○ | ○ |
| | 4 | 2.5 | - | 450 | 24 | 1.00 | 6.0 | 5 | 8.5 | ⊙ | ⊙ | ⊙ | ○ | ○ |
| | 5 | 2.0 | - | 400 | 72 | 0.98 | 6.8 | 6 | 8.8 | ⊙ | ⊙ | ⊙ | ○ | ○ |
| | 6 | 2.0 | - | 450 | 24 | 0.96 | 6.7 | 6 | 8.3 | ⊙ | ⊙ | ⊙ | ○ | ○ |
| | 7 | 2.9 | - | 400 | 72 | 1.07 | 5.5 | 5 | 12.8 | ⊙ | ⊙ | ⊙ | ○ | ○ |
| | 8 | 2.9 | - | 450 | 24 | 1.03 | 5.6 | 5 | 12.3 | ⊙ | ⊙ | ⊙ | ○ | ○ |
| Invention | 9* | 4.0 | - | 400 | 100 | 1.52 | 5.0 | 5 | 12.4 | ○ | ⊙ | ⊙ | ○ | ○ |
| | 10* | 4.0 | - | 450 | 100 | 1.49 | 4.8 | 5 | 12.5 | ○ | ⊙ | ⊙ | ○ | ○ |
| | 11 | 2.5 | Ti: 0.20 | 450 | 24 | 1.03 | 5.7 | 5 | 8.7 | ○ | ⊙ | ⊙ | ○ | ⊙ |
| | 12 | 2.5 | B: 0.03 | 450 | 24 | 0.98 | 6.1 | 5 | 8.6 | ⊙ | ⊙ | ⊙ | ○ | ⊙ |
| | 13 | 2.5 | Zr 0.30 | 450 | 24 | 1.00 | 6.0 | 5 | 8.6 | ⊙ | ○ | ⊙ | ○ | ⊙ |
| | 14 | 2.5 | Sr 0.20 | 450 | 24 | 0.95 | 5.6 | 5 | 8.7 | ⊙ | ⊙ | ⊙ | ○ | ○ |
| | 15 | 2.5 | Mg: 0.20 | 450 | 24 | 1.01 | 6.2 | 5 | 8.7 | ⊙ | ⊙ | ⊙ | ○ | ○ |
| | 16 | 2.5 | - | 450 | 5 | 1.28 | 6.3 | 5 | 8.7 | ⊙ | ⊙ | ⊙ | ○ | ○ |

| | | | | | | | | | | | | | | |
|---|---|---|---|---|---|---|---|---|---|---|---|---|---|---|
| *Steel sheets No. 2, 3, 9, and 10 do not constitute the invention | | | | | | | | | | | | | | |

**Table 4**

| Class | No. | Al based alloy plating bath | | Post heat treatment | | Al-coated layer | | Alloy layer | | Evaluation of characteristics | | | | |
|---|---|---|---|---|---|---|---|---|---|---|---|---|---|---|
| | | Si (% by mass) | Elements added (% by mass) | Heating temperature (°C) | Heating time (h) | Average Si concentration of surface layer to depth of 3 µm (% by mass) | Area ratio of Al-Fe based intermetallic compound phase occupying surface (%) | Thickness (µm) | Average Si concentration of upper layer (% by mass) | Total reflection characteristics | Corrosion resistance | Appearance after subjecting to anodizing treatment | Workability | Surface appearance |
| Comparison | 31 | 0 | - | (no heating) | | 0 | 45 | 10 | 0.0 | Δ | Δ | × | × | ○ |
| | 32 | 0 | - | 450 | 48 | 0 | 45 | 10 | 0.0 | Δ | Δ | × | × | ○ |
| | 32 33 | 1.0 | - | (no heating) | | 1.31 | 30 | 9 | 0.8 | Δ | Δ | × | × | ○ |
| | 34 | 2.0 | - | (no heating | | 2.60 | 6.8 | 8 | 1.8 | × | Δ | × | ○ | ○ |
| | 35 | 7.0 | - | (no heating) | | 8.12 | 5.0 | 4 | 4.7 | × | × | × | ○ | ○ |
| | 36 | 7.0 | - | 450 | 48 | 3.48 | 4.9 | 4 | 12.8 | × | Δ | × | ○ | ○ |
| | 37 | 2.5 | - | (no heating) | | 3.30 | 6.6 | 7 | 2.2 | × | Δ | × | ○ | ○ |
| | 38 | 2.0 | - | 200 | 48 | 2.52 | 6.0 | 6 | 2.1 | × | Δ | × | ○ | ○ |
| | 39 | 9.0 | - | (no heating) | | 11.3 | 4.9 | 4 | Single layer 10.9 | × | × | × | ○ | ○ |
| | 40 | 9.0 | - | 450 | 48 | 7.0 | 4.7 | 4 | Single layer 11.1 | × | × | × | ○ | ○ |
| | 41 | 2.5 | - | 400 | 5 | 2.51 | 6.5 | 4 | 2.1 | x | Δ | Δ | ○ | ○ |

The specimens according to the invention were improved in total reflection characteristics, corrosion resistance, and appearance after subjecting to an anodizing treatment, and also were good in workability and surface appearance. In particular, the specimens having an average Si concentration of the surface layer extending to a depth of 3 µm of the Al-coated layer of 1.3% by mass or less were considerably excellent in total reflection characteristics, corrosion resistance, and appearance after subjecting to an anodizing treatment.

On the other hand, Nos. 31 and 32 as comparative examples were manufactured by using a pure Al plating bath, in which a large amount of an Al-Fe based intermetallic compound phase was formed in the vicinity of the surface of the plated layer. The Al-Fe based intermetallic compound phase remained substantially unchanged after subjecting to the post heat treatment (No. 32) . These specimens had no Si present in the surface layer portion of the Al-coated layer, but were not improved in total reflection characteristics and corrosion resistance and were inferior in appearance after subjecting to an anodizing treatment, due to the large area ratio of the Al-Fe based intermetallic compound phase occupying the surface. The specimens were also inferior in workability due to the alloy layer formed to have a large thickness.

No. 33 maintained the tendency that a large amount of an Al-Fe based intermetallic compound phase was formed in the vicinity of the surface of the plated layer, due to the too small Si content in the plating bath. Accordingly, the specimen was inferior in various characteristics as similar to the specimens using a pure Al bath. This specimen was not subjected to a post heat treatment. However, it is difficult to reduce the area ratio of the Al-Fe based intermetallic compound phase occupying the surface through a post heat treatment.

Nos. 34, 37, 38 and 41 had a high average Si concentration of the surface layer portion of the Al-coated layer since a post heat treatment was not performed, and the heating conditions were not proper, although the plating bath had the appropriate Si content. As a result, the specimens were inferior in total reflection characteristics and appearance after subjecting to an anodizing treatment and were insufficient in improvement of corrosion resistance.

Nos. 35 and 39 were hot-dip Al based alloy plated steel sheets manufactured by using a plating bath having a high Si content, and were inferior in total reflection characteristics, corrosion resistance, and appearance after subjecting to an anodizing treatment due to the large average Si concentration in the surface layer portion of the Al-coated layer (the Al-coated layers in these specimens were the Al based alloy plated layers intact after plating).

Nos. 36 and 40 were obtained by subjecting a hot-dip Al based alloy plated steel sheet manufactured by using a plating bath having a high Si content to a post heat treatment, but the average Si concentration of the surface layer portion of the Al-coated layer did not sufficiently reduced, and thus the specimens were not improved in total reflection characteristics, corrosion resistance, and appearance after subjecting to an anodizing treatment.

### Reference Sign List

- 1: base steel sheet
- 2: alloy layer
- 3: Al based alloy plated layer
- 4: Al phase
- 5: Al-Fe based intermetallic compound phase
- 6: Si phase
- 10: surface
- 30: Al-coated layer

## Claims

1. An Al-coated steel sheet having excellent total reflection characteristics and corrosion resistance, comprising a base steel sheet comprising from 0.001 to 0.06% of C, 0.5% or less of Si, 1.0% or less of Mn, 0.016% or less of P, 0.007% or less of S, 0.012% or less of Al, 0.015% or less of N, and from 0 to 0.03% of Ti, all in terms of percentage by mass, with the balance of Fe and unavoidable impurities, and having on a surface thereof an Al-coated layer, which contains an Al-Fe based intermetallic compound phase and a Si phase, having an average thickness of 7 µm or more with an Al-Fe-Si based alloy layer intervening therebetween, a surface layer portion of the Al-coated layer extending from the surface thereof to a depth of 3 µm having an average Si concentration of 1.3% by mass or less, which is obtained by energy dispersive X-ray spectrometry analysis for the rectangular area having a dimension of 3 µm × 20 µm with the edge having a length of 3 µm in the thickness direction of the Al-coated layer in the cross sectional surface in parallel to the thickness direction of the Al-coated layer, and an area ratio of an Al-Fe based intermetallic compound phase occupying the surface of the Al-coated layer being 10% or less.

2. A method for manufacturing an Al-coated steel sheet having excellent total reflection characteristics and corrosion resistance according to claim 1, comprising:
a step of manufacturing a hot-dip Al based alloy plated steel sheet having a plated layer having an average thickness of 7 µm or more, by using a hot-dip Al based alloy plating bath having a Si content of 1.5% or more and less than 3.0% by mass, Fe content of 3% or less and optionally one or more of Ti of 1.0 % or less, B of 1.0% or less, Zr of 1.0% or less, Sr of 1.0% or less and Mg of 5.0% or less, all in terms of percentage by mass, with the balance of Al and unavoidable impurities; and
a step of modifying the plated layer to an Al-coated layer having a surface layer portion extending from the surface thereof to a depth of 3 µm that has an average Si concentration of 1.3% by mass or less, by heating and retaining the hot-dip Al based alloy plated steel sheet to a temperature of from 380 to 460°C to progress diffusion of Si and to reduce the Si-phase in the plated layer.

## Patentansprüche

1. Al-beschichtetes Stahlblech mit hervorragenden Gesamtreflexionseigenschaften und Korrosionsbeständigkeit, welches ein Basisstahlblech aufweist, welches aus 0,001 bis 0,06 % C, aus 0,5% oder weniger Si, aus 1,0 % oder weniger Mn, aus 0,016 % oder weniger P, aus 0,007 % oder weniger S, aus 0,012 % oder weniger Al, aus 0,015 % oder weniger N und aus 0 bis 0,03 % Ti, jeweils in Massenprozent, besteht, wobei der Rest Fe und unvermeidbare Verunreinigungen ist, und welches auf einer Oberfläche davon eine Al-Beschichtungsschicht hat, welche eine Al-Fe-basierte intermetallische Verbindungsphase und eine Si-Phase mit einer durchschnittlichen Dicke von 7 µm oder mehr enthält, wobei eine Al-Fe-Si-basierte Legierungsschicht dazwischen liegt, wobei ein Oberflächenschichtteil der Al-Beschichtungsschicht sich von der Oberfläche davon bis zu einer Tiefe von 3 µm erstreckt, und zwar mit einer durchschnittlichen Si-Konzentration von 1,3 Massenprozent oder weniger, welche durch energie-dispersive Röntgenspektrometrieanalyse eines rechteckigen Bereiches mit einer Abmessung von 3 µm mal 20 µm erlangt wird, wobei die Kante eine Länge von 3 µm in der Dickenrichtung der Al-Beschichtungsschicht in der Querschnittsfläche parallel zur Dickenrichtung der Al-Beschichtungsschicht hat, und wobei ein Flächenverhältnis einer Al-Fe-basierten intermetallischen Verbundphase, welche die Oberfläche der Al-Beschichtungsschicht einnimmt, 10 % oder weniger ist.

2. Verfahren zur Herstellung eines Al-beschichteten Stahlbleches mit hervorragenden Gesamtreflexionseigenschaften und Korrosionsbeständigkeit nach Anspruch 1, welches Folgendes aufweist:
einen Schritt der Herstellung eines heiß-tauchbeschichteten, mit einer Al-basierten Legierung platierten bzw. beschichteten Stahlblechs mit einer platierten bzw. aufgebrachten Schicht, die eine durchschnittliche Dicke von 7 µm oder mehr hat, durch Verwendung eines Heiß-Tauchbeschichtungsbades mit einer Al-basierten Legierung mit einem Si-Gehalt von 1,5 Massenprozent oder mehr und 3,0 Massenprozent oder weniger, mit einem Fe-Gehalt von 3 % oder weniger und optional einem oder mehreren von 1,0% oder weniger Ti, 1,0% oder weniger B, 1,0 % oder weniger Zr, 1,0 % oder weniger Sr und 5,0 % oder weniger Mg, jeweils in Massenprozent angegeben, wobei der Rest Al und unvermeidbare Verunreinigungen ist; und
einen Schritt des Modifizierens der platierten bzw. aufgebrachten Schicht zu einer Al-Beschichtungsschicht, die einen Oberflächenschichtteil hat, der sich von der Oberfläche davon bis zu einer Tiefe von 3 µm erstreckt, die eine durchschnittliche Si-Konzentration von 1,3 Massenprozent oder weniger hat, und zwar durch Aufheizen und Halten des heiß-tauchbeschichteten mit einer Al-basierten Legierung platierten bzw. beschichteten Stahlbleches auf eine Temperatur von 380 bis 460 °C, um die Diffusion von Si voranzutreiben, und die Si-Phase in der platierten bzw. aufgebrachten Schicht zu reduzieren.

## Revendications

1. Tôle d'acier revêtue d'Al ayant d'excellentes caractéristiques de réflexion totale et une résistance à la corrosion, comprenant une tôle d'acier de base comprenant de 0,001 à 0,06 % de C, 0,5 % ou moins de Si, 1,0 % ou moins de Mn, 0,016 % ou moins de P, 0,007 % ou moins de S, 0,012 % ou moins de Al, 0,015 % ou moins de N, et de 0 à 0,03 % ou moins de Ti, le tout en termes de pourcentage en masse, avec le complément en Fe et d'inévitables impuretés, et ayant sur sa surface une couche revêtue d'Al, qui contient une phase de composé intermétalique à base de Al-Fe et une phase de Si, ayant une épaisseur moyenne de 7 µm ou plus avec une couche d'alliage à base d'Al-Fe-Si située entre elles, une partie de la couche de surface de la couche revêtue d'Al s'étendant depuis sa surface jusqu'à une profondeur de 3 µm ayant une concentration moyenne en Si de 1,3 % en masse ou moins, qui est obtenue par analyse par spectrométrie aux rayons X à dispersion d'énergie pour la surface rectangulaire ayant une dimension de 3 µm x 20 µm dont le bord a une longueur de 3 µm dans la direction de l'épaisseur de la couche revêtue d'Al dans la surface transversale en parallèle à la direction de l'épaisseur de la couche revêtue d'Al et un rapport de surface d'une phase d'un composé intermétallique à base de Al-Fe occupant la surface de la couche revêtue d'Al étant 10 % ou moins.

2. Procédé de fabrication d'une tôle d'acier revêtue d'Al ayant d'excellentes caractéristiques de réflexion totale et une résistance à la corrosion selon la revendication 1, comprenant :
une étape de fabrication d'une tôle d'acier revêtue d'un alliage à base d'Al trempé à chaud comportant une couche revêtue ayant une épaisseur moyenne de 7,0 µm ou plus, en utilisant un bain de plaquage d'alliage à base d'Al trempé à chaud ayant une teneur en Si de 1,5 % ou plus et moins de 3,0 % en masse, une teneur en Fe de 3 % ou moins et en option un ou plusieurs parmi Ti à 1,0 % ou moins, B à 1,0 % ou moins, Zr à 1,0 % ou moins, Sr à 1,0 % ou moins et Mg à 5,0 % ou moins, le tout en termes de pourcentage en masse, avec le complément d'Al et d'inévitables impuretés ; et
une étape de modification de la couche plaquée en une couche revêtue d'Al ayant une partie de couche de surface s'étendant de sa surface jusqu'à une profondeur de 3 µm qui a une concentration moyenne en Si de 1,3 % en masse ou moins, en chauffant et maintenant la tôle d'acier plaquée d'un alliage à base d'Al trempé à chaud à une température de 380 à 460 °C pour faire progresser la diffusion de Si et pour réduire la phase de Si dans la couche plaquée.
